Europäisches Patentamt

European Patent Office

Office européen des brevets

(11) Publication number: **0 040 716**
A1

(12) **EUROPEAN PATENT APPLICATION**

(21) Application number: 81103367.9

(22) Date of filing: 05.05.81

(51) Int. Cl.³: **G 02 B 27/14, H 04 N 1/12**

(30) Priority: 22.05.80 US 152442

(43) Date of publication of application: 02.12.81
Bulletin 81/48

(84) Designated Contracting States: DE FR GB IT

(71) Applicant: International Business Machines Corporation, Armonk, N.Y. 10504 (US)

(72) Inventor: Grant, Duane Earl, 445 South 68th Street, Boulder Colorado 80303 (US)
Inventor: Maddox, Randall Adrian, Route 2, Barkley Lane, Georgetown, Kentucky 42431 (US)

(74) Representative: Hawkins, Anthony George Frederick, IBM United Kingdom Patent Operations Hursley Park, Winchester Hants. S021 2JN (GB)

(54) **Image multiplexing device.**

(57) Light from an illuminated line on an object, for example a document, at an object plane (12) is directed to mirrors (28, 24) and thence through a lens (30) to provide focussed multiple line images at image plane (20). Linear photosensor arrays (18, 14, 16) sense the line images. The photosensors may be arranged such that they sense different portions of the line images or by including colour filters between the lense and image plane, different colour components of the images.

0040716

## IMAGE MULTIPLEXING DEVICE

The present invention relates to optical assemblies for generating a plurality of images from a single object, termed image multiplexing devices.

Several apparatus and methods have been used in the prior art to generate multiple images from a single object. In one prior art method, a beam splitter is positioned in the path of light rays propagating from an object plane to an image plane. The beam splitter splits the ray into two so that an image of an object which is being propagated is formed into two images. One problem associated with this technique is that the light which is incident on the arrays is reduced by an amount greater than 50%. The reduction stems from the fact that the single ray is divided into two. As a result, the lighting requirement for a particular system has to be designed at a higher rating than is necessary. This tends to increase power consumption and system cost. Moreover, if the beam splitter is not a pellicle, double images are formed by reflections from one of the glass surfaces which form the beam splitter. The reflection usually results in optical cross-talk and is therefore undesirable. U.S. Patent Specification No. 4,005,285 shows such a multiplexing system employing a prism beam splitter.

Another prior art technique, as shown in U.S. Patent Specification No. 4,009,388, uses a divider for multiplexing. In this technique a dividing mirror is positioned so that light rays propagating from the object plane are split and directed onto two image planes. By properly positioning the dividing mirror, cross-talk between the image is reduced. However, only approximately 50% of the available light is used for each photosensor array positioned in the image planes.

U.S. Patent Specification No. 3756696 shows yet another multiplexing arrangement in which a cathode ray tube image is projected by a mirror and lens system to provide a plurality of images of the CRT image at a microfilm station. The CRT image is reflected by a plurality of separate mirrors which define the light paths for the separate microfilm images and thence to a further mirror assembly from which they are passed through a common lens to the microfilm station. As the mirror assembly is positioned closer to the CRT face than the separate mirrors, these mirrors have to be spaced to avoid interference of their view of the CRT by the mirror assembly. Thus, they subtend relatively large angles with respect to the central axis of the system. This results in the system having extremely limited depth of field. In the described system this does not matter, as a picture on a fixed position CRT face is to be imaged, but when a movable object, such as a document is to be imaged, a somewhat greater depth of field is desirable to allow for some variation in its positioning. In addition, each separate optical path in the described system employs two mirrors, and to provide the greatest amount of intensity in the final image, it is desirable to reduce this number.

It is, therefore, an object of the present invention to provide an image multiplexing system in which the disadvantages of the prior art systems are minimised. To achieve this, each optical path producing one of the images employs a single mirror. The arrangement is such that the mirrors for each path are positioned closely together to provide substantial depth of field.

According to the invention, there is provided an image multiplexing device for projecting multiple images of an illuminated line on an object at an object plane, comprising a plurality of closely spaced adjacent planar mirrors to which light from the
illuminated line is directed, said mirrors being oriented to
reflect the light received thereby directly to a common lens to
produce multiple focussed images of the illuminated line at the
image plane, the arrangement being such that the central optical
axes of the light paths between the illuminated line and the
multiple images all pass through the centre of the lens.

The invention will now be described by way of example, with
reference to the accompanying drawings, in which:-

FIG. 1 is a diagram of an arrangement of an image multiplexing
device embodying the present invention;

FIG. 2 is a diagram showing an arrangement for the photosensitive arrays in the device of FIG. 1;

FIG. 3 shows an image multiplexing configuration for a colour
scanning system; and

FIG. 4 shows an arrangement for the arrays used in the FIG. 3
system.

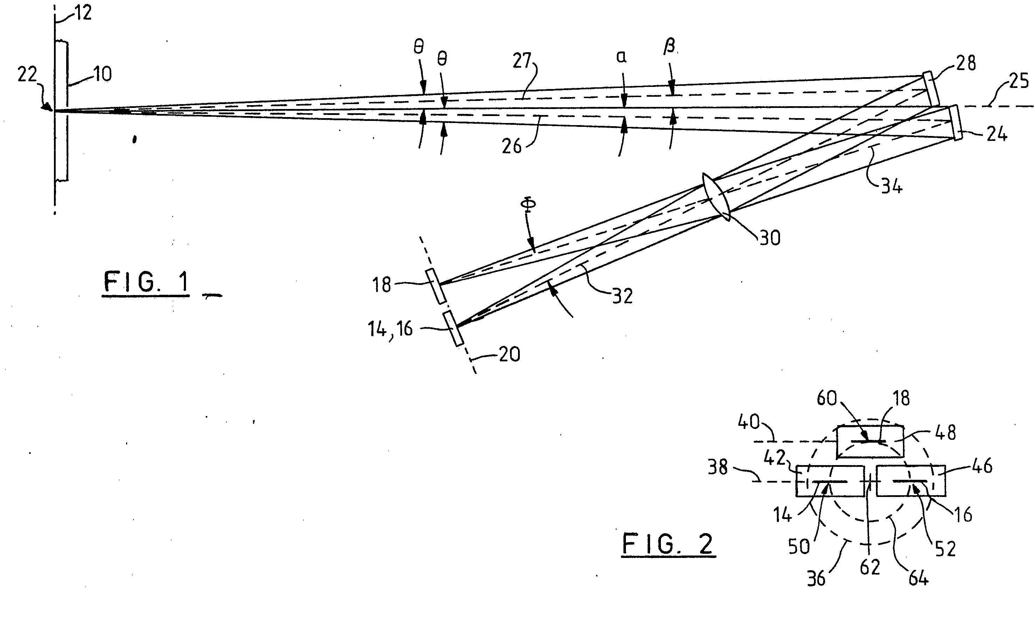

FIGS. 1 and 2 show an image multiplexing system, embodying
the present invention. An illumination source (not shown) is
positioned to direct either a scanning or a fixed line of light on
to a document glass 10. The document glass is positioned at the
object plane 12 of the multiplexing assembly. A plurality of
photosensitive arrays 14, 16 and 18 are positioned at the image
plane 20 of the assembly. Line images from a document positioned
at plane 12 are propagated along separate optical paths between the
object plane and the image plane. Multiple images are imaged onto multiple arrays positioned at the image plane. A first multiplexor mirror 24 is positioned relative to the object plane. The arrangement is such that an angle $\Theta$ is subtended by multiplexor mirror 24 and an optical axis 26 is propagated from the line object at an angle $\alpha$ to the normal line 25 to the glass. A second multiplexor mirror 28 is placed relative to the first multiplexor mirror 24 and the object plane. The arrangement is such that the second multiplexor mirror subtends an angle $\theta$ and has its optical axis 27 at an angle $\beta$ to the normal line 25 to the glass. As shown in FIG. 1, $\alpha$ equals $\beta$ and is of the order of $2^{\circ}$, and $\theta$ equals $\alpha$ plus $\beta$. Multiplexor mirror 28 is fixed while multiplexor mirror 24 is adjustable. As will be explained subsequently, each of the mirrors generate a separate image line at the image plane. With an adjustable multiplexor mirror, at least one of the image lines at the image plane can be adjusted relative to the other.

Still referring to FIGS. 1 and 2, an objective lens 30 is positioned between the image plane 20 and the multiplexor mirrors 28 and 24 respectively. The arrangement is such that optical axis 27 reflected from mirror 28 and optical axis 26 reflected from mirror 24 are propagated at a relative angle $\Phi$ to each other through the centre of lens 30. The angle $\Phi$ is chosen for most uniform location of arrays 14, 16 and 18 relative to the lens mechanical and optical axis 32. In FIG. 1 which shows a side view of the image plane 20, the multiplexor rays emanating from the object lens 30 are projected onto arrays 14 and 16 positioned along one of the image lines.

Turning now to FIG. 2, a plane view of the photosensitive arrays at the image plane is shown. The showing is helpful in understanding the location of the linear photosensitive arrays at the image plane. The outer circle 36 represents the image field of the lens 30. In order to form multiple images of a line object placed at the document platen, the linear sensor arrays must be placed within the boundaries of the outer circle. As was stated previously, each of the multiplexor mirrors generates an object line at the image plane separated by an angle $\Phi$. In the sketches of FIGS. 1 and 2, two multiplexor mirrors are used, therefore, two image lines identified as image line 38 and image line 40 are formed at the image plane. The image line 38 is generated from fixed multiplexor mirror 28 while the image line 40 is generated from adjustable multiplexor mirror 24. Linear array 14 and linear array 16 are placed in spaced relation on the image line 38. The arrangement is such that the array axis coincides with the image line 38. Similarly, array 18 is placed on adjustable image line 40. The array axis coincides with image line 40. Each of the arrays are mounted on respective sensor headers 42, 46 and 48. The sensor headers support the linear arrays and are mounted to the frame of the apparatus. The headers are mounted so that the array's centres 50, 52 and 60 are equidistant from the lens axis 62. As is shown in FIG. 2 the array centres are positioned on a circle 64 having the lens axis 62 as its centre. The arrangement of the linear arrays shown in FIG. 2 allows for the generation of plural images of a single object line. In order to reconstruct a continuous image from the arrays, the end portions of the continuous image line are formed from sensors 14 and 16 respectively, while the central portion of the continuous image line is generated from sensor array 18. Of course, abuttment and alignment is done electronically.

As indicated above, optical axis 26 and optical axis 27, are separated from the normal line 25 to the glass by angular differences $\alpha$ and $\beta$. The relative aperture of the lens determines the angular difference. In the preferred embodiment of this invention, the separation angle is approximately two degrees with an f/5.6, 135mm focal length and 1/4.25 magnification lens. The irradiance for each array is determined by the section of the field of view of lens that it falls within. In the figures, particularly 1 and 2, arrays 14 and 16 are imaged on the lens axis vertically and are separated off axis horizontally. Array 18 is imaged off axis vertically and is centred horizontally.

With this arrangement, all arrays make an angle with the lens central ray such that the imaging field angle for all three arrays is substantially equal, resulting in the same modulation transfer function (MTF) for each array image plane. Also for equal off-axis conditions, the irradiance from each image plane is the same.

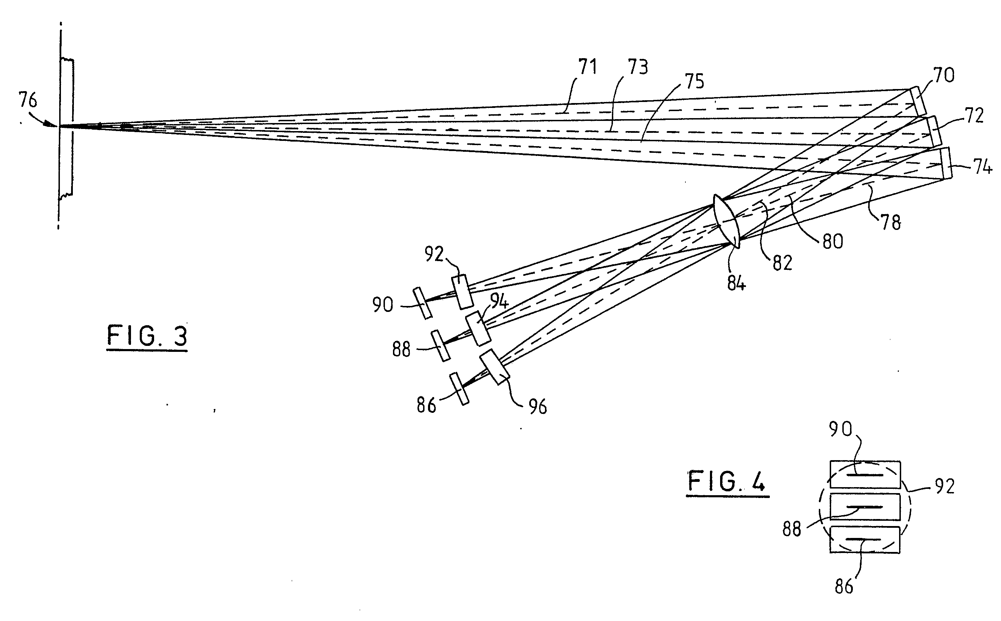

In FIG. 3, three line images are multiplexed from the document glass by mirrors 70, 72 and 74 respectively. The arrangement of the mirrors relative to line object 76 is similar to the arrangement previously described. The optical axes 78, 80 and 82 emanating from the mirrors and passing through the center of lens 84 are inclined at a predetermined angle for array location. The predetermined angle has the same characteristics as the angles described above. The rays are then focused onto three horizontal image lines spaced vertically at the image plane. Linear photosensitive arrays 86, 88 and 90 are arranged on each image line at the image plane. The arrays are all positioned within the lens image field 92.

The configuration shown in FIGS. 3 and 4, is ideally suited for use in a colour scanner. In the arrangement, each array is associated with one of the primary colours: CYAN, Magenta, and Yellow. By way of example, array 86, 88 and 90 will generate separate images having tonal characteristics of the primary colors, yellow, magenta and cyan, respectively. A cyan filter 92 is positioned to intercept rays incident on to linear array 90. Likewise, a magenta filter 94 is positioned to intercept rays incident on to the magenta array. Finally, a yellow filter is positioned to intercept rays incident on to the yellow array. The output from the arrays may be employed to drive an apparatus such as a multicolour ink jet printer to reproduce a colour copy of the colour original.

It should be noted that although the present invention is described within the static mode, that is without reference to any scanning motion, a practical system embodying the present invention would include an illumination system and a scanning system. The illumination system generates needed light for illuminating the document platen while the scanning system establishes relative scanning motion between the object at the document platen and the sensors at the image plane.

CLAIMS

1.   An image multiplexing device for projecting multiple images of an illuminated line on an object at an object plane, comprising a plurality of closely spaced adjacent planar mirrors to which light from the illuminated line is directed, said mirrors being oriented to reflect the light received thereby directly to a common lens to produce multiple focussed images of the illuminated line at the image plane, the arrangement being such that the central optical axes of the light paths between the illuminated line and the multiple images all pass through the centre of the lens.

2.   A device as claimed in claim 1 including linear photosensor arrays positioned at the image plane to sense the images.

3.   A device as claimed in claim 2 in which said arrays are positioned such that the array centres are equidistant from the axis of the lens.

4.   A device as claimed in claim 2 or claim 3 in which the arrays are of a size and are positioned such as to each receive a different portion of the images.

5.   A device as claimed in any of claims 2 to 4 in which two line images are produced, and two arrays are positioned to sense respective portions of one line image spaced about a central portion thereof and a third array is positioned to sense a central portion of the other line image.

6.   A device as claimed in claim 2, in which said light from the illuminated line is polychromatic and including colour filters, each positioned between the lens and the image plane to filter light forming a respective one of the line images whereby each array senses different colour components of the light from the illuminated line.

0040716

7. A device as claimed in any of the previous claims in which said object is a document positioned for movement along said object plane.

FIG. 1

FIG. 2

0040716

FIG. 3

FIG. 4

0040716

## DOCUMENTS CONSIDERED TO·BE RELEVANT

| Category | Citation of document with indication, where appropriate, of relevant passages | Relevant to claim |
|---|---|---|
| X | EP – A1 – 0 009 983 (XEROX CORP.)<br>* claims 1 to 6; page 7 * | 1–5 |
| | CA – A – 1 073 715 (NORTHERN TELECOM LTD)<br>* fig. 5 * | 1 |
| | DE – A1 – 2 549 109 (NIPPON KOGAKU K.K.)<br>* fig. 1 * | 1,6 |
| A | DE – C – 697 039 (I. KELEMEN)<br>* claim 1 * | 1 |
| D,A | US – A – 4 005 285 (E.E. PRICE)<br>* complete document * | 2–4 |
| A | US – A – 4 147 928 (P.A. CREAN)<br>* fig. 1 * | 5 |
| A | DE – A1 – 2 607 095 (ELBE–KAMERA–GMBH)<br>* claims * | 6–7 |

**CLASSIFICATION OF THE APPLICATION (Int. Cl.³)**

G 02 B 27/14
H 04 N 1/12

**TECHNICAL FIELDS SEARCHED (Int. Cl.³)**

G 02 B 27/10
G 02 B 27/14
H 04 N 1/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 10-08-1981 | FUCHS |

EPO Form 1503.1 06.78